# DEMANDE DE BREVET EUROPEEN

(11) **EP 1 139 005 A2**
(43) Date de publication de la demande: **04.10.2001**
(21) Numéro de dépôt: 01400055.8
(22) Date de dépôt: 10.01.2001
(51) Int. Cl.: F16N 15/00, B23Q 11/10

(54) **Procédé de lubrification mettant en oeuvre du dioxyde de carbone liquide**

(30) Priorité: 02.02.2000 FR 0001305
(71) Demandeur: Carboxyque Française, 92088 Paris La Défense (FR)
(72) Inventeur: Gigant, Bernard, Carboxyque Francaise, 92088 Paris La Defense (FR); Gibot, Claude, Carboxyque Francaise, 92088 Paris La Defense (FR); Abrial, Francois, Carboxyque Francaise, 92088 Paris La Defense (FR)
(74) Mandataire: Ducreux, Marie

(57) **Abrégé**

La présente invention concerne un procédé de lubrification du contact entre deux surfaces dans lequel on incorpore un lubrifiant entre les deux surfaces, le lubrifiant étant constitué essentiellement de dioxyde de carbone injecté au moins en partie sous forme liquide à proximité de la zone de contact desdites surfaces.

L'invention concerne également un dispositif d'usinage mettant en oeuvre ce procédé de lubrification et l'utilisation du dioxyde de carbone liquide en tant que lubrifiant.

## Description

La présente invention concerne un procédé de lubrification d'un appareil d'usinage au moyen de dioxyde de carbone liquide et un dispositif d'usinage correspondant.

L'usinage nécessite la mise en oeuvre d'un procédé de lubrification destiné à préserver l'outil de coupe et à assurer la qualité et la reproductibilité dudit usinage. En effet, au cours de l'usinage, l'outil de coupe et la pièce à usiner s'échauffent jusqu'à des températures élevées pouvant endommager leurs matériaux. En outre, l'usinage crée des déchets, des copeaux qui, s'ils ne sont pas éliminés de la surface d'usinage, vont empêcher une bonne approche de la pièce à usiner par l'outil d'usinage : la qualité de l'usinage en sera affectée.

Afin de réduire les conséquences de ces phénomènes, l'usinage est associé à une lubrification qui vise à la fois à refroidir l'outil d'usinage et à éviter le collage de copeaux contre celui-ci ou la pièce à usiner.

Cette lubrification est assurée actuellement par l'emploi d'une huile de lubrification. Pour la mise en oeuvre de cette huile, les dispositifs d'usinage comprennent généralement un joint tournant qui alimente la tête d'usinage du dispositif en huile sous pression. L'huile permet de limiter réchauffement de la tête d'usinage. De plus, comme elle est sous pression, elle évacue les copeaux issus de l'usinage.

De préférence, on utilise une tête d'usinage comprenant un perçage central débouchant en son extrémité dans la zone d'attaque de l'usinage. L'huile de lubrification est introduite dans la tête d'usinage par l'intermédiaire de ce perçage. Elle assure le refroidissement de la tête d'usinage sur toute sa longueur et notamment dans la zone d'attaque de l'usinage.

Ce procédé de lubrification présente toutefois des inconvénients.

Tout d'abord, ce procédé crée des projections d'huile qui salissent l'atelier d'usinage.

Ensuite, l'utilisation d'huile nécessite, après usinage, d'une part le nettoyage des outils d'usinage, et d'autre part le nettoyage des pièces qui ont été usinées.

Enfin, l'huile utilisée doit être récupérée et recyclée en raison des contraintes de respect de l'environnement touchant aux lubrifiants. Dans ce même contexte, les déchets ou copeaux issus de l'usinage sont recouverts d'huile et doivent être nettoyés avant recyclage ou élimination.

Un but de la présente invention est de proposer une solution à ces problèmes en fournissant notamment un procédé de lubrification évitant les contraintes de nettoyage des outils et des pièces usinées et limitant les problèmes de retraitement du lubrifiant.

Dans ce but, l'invention concerne un procédé de lubrification du contact entre deux surfaces, dans lequel on incorpore un lubrifiant entre les deux surfaces, le lubrifiant étant constitué essentiellement de dioxyde de carbone injecté au moins en partie sous forme liquide à proximité de la zone de contact desdites surfaces.

Ainsi, l'invention consiste à utiliser comme lubrifiant du dioxyde de carbone liquide de manière à limiter les frottements entre les deux surfaces en contact et leur échauffement. Pour la mise en oeuvre du procédé, du dioxyde de carbone stocké sous forme liquide est injecté à proximité de la zone de contact des surfaces à lubrifier. De préférence, lors de l'injection du dioxyde de carbone, au moins 80 % en volume du dioxyde de carbone est sous forme liquide. Le complément à 100 % est du dioxyde de carbone gazeux ou solide dû à un commencement de détente du dioxyde de carbone liquide.

Suite à son injection, le dioxyde de carbone liquide est immédiatement et totalement détendu à pression atmosphérique Pₐₜₘ et à température ambiante T_{amb}. Cette détente permet à la fois :
- de refroidir les deux surfaces en contact du fait du changement d'état de dioxyde de carbone, et
- d'éliminer les déchets ou copeaux pouvant être issus de la mise en contact des deux surfaces par effet de souffle.

Pour bénéficier de cet effet de détente, qui est très rapide et local, le dioxyde de carbone sous forme liquide doit être injecté à proximité de la zone de contact à lubrifier. Ainsi, de préférence, la distance entre le point d'injection du dioxyde de carbone liquide et la zone de contact des deux surfaces est telle qu'au moins 80 % en volume du dioxyde de carbone soit encore liquide lors de son entrée en contact avec la zone de contact des deux surfaces. Le point d'injection correspond à l'entrée dans le milieu à Pₐₜₘ et T_{amb}.

De manière encore plus préférentielle, le dioxyde de carbone sous forme liquide est injecté directement dans la zone de contact des deux surfaces.

Ce procédé est adapté pour la lubrification de tout type de surfaces telles que les surfaces métalliques, plastiques ou à base de matériaux composites.

L'invention est particulièrement adaptée à la lubrification des procédés d'usinage tels que le perçage, l'alésage ou le polissage.

Selon un premier mode, le dioxyde de carbone est apporté pour être injecté à proximité des surfaces en contact par un conduit se trouvant à l'intérieur d'une des pièces dont la surface est en contact. Ce premier mode peut être mis en oeuvre dans le cas de procédés de lubrification d'appareils d'usinage réalisant des usinages en profondeur tels que le perçage ou l'alésage.

Selon un deuxième mode, le dioxyde de carbone est apporté et injecté à proximité des surfaces en contact par un conduit se trouvant à l'extérieur des pièces dont les surfaces sont en contact, par exemple par un flexible orienté vers les surfaces à traiter. Ce mode peut être mis en oeuvre dans le cas de procédés de lubrification d'appareils d'usinage réalisant des usinages de surface tels que le polissage.

L'invention conceme plus particulièrement un procédé de lubrification selon le premier mode ci-dessus adapté pour la lubrification d'un appareil d'usinage pour lequel les deux surfaces sont la surface de la tête d'usinage de l'appareil d'usinage et la surface d'une pièce à usiner et dans lequel :
- on utilise un appareil d'usinage comprenant une tête d'usinage dont une extrémité est reliée à un arbre d'entraînement et dont l'autre extrémité est mise en contact avec la pièce à usiner, la tête d'usinage étant percée d'un conduit, ledit conduit étant ouvert à la fois :
   . au niveau de l'extrémité de la tête d'usinage reliée à l'arbre d'entraînement,
   . au niveau de la zone d'attaque de la tête d'usinage mise en contact avec la pièce à usiner,
- lors de la mise en rotation de l'arbre d'entraînement, du dioxyde de carbone liquide est introduit dans le conduit de la tête d'usinage par l'extrémité reliée à l'arbre d'entraînement et en ressort par l'extrémité mise en contact avec la pièce à usiner.

Selon ce procédé, le dioxyde de carbone liquide est, de préférence, introduit dans le conduit de la tête d'usinage à des conditions de température et de pression au-dessus du point triple. Ainsi, le dioxyde de carbone est essentiellement sous forme liquide dans le conduit.

Selon une première variante de ce procédé de lubrification d'un appareil d'usinage, le dioxyde de carbone liquide est introduit dans le conduit de la tête d'usinage à température supérieure ou égale à la température ambiante. C'est le cas, par exemple, lorsque le conduit de la tête d'usinage est directement relié à une source de dioxyde de carbone liquide à température ambiante ou supérieure à la température ambiante, comme lorsque le dioxyde de carbone provient directement d'une bouteille ; le dioxyde de carbone est alors sous haute pression. Ce peut être également le cas où le dioxyde de carbone provient d'une source de dioxyde de carbone liquide basse pression réfrigérée à partir de laquelle le dioxyde de carbone liquide est compressé et réchauffé. Selon cette première variante, il est préférable que le diamètre du conduit de la tête d'usinage soit d'au plus 1 mm.

Selon une deuxième variante de ce procédé de lubrification d'un appareil d'usinage, le dioxyde de carbone liquide est introduit dans le conduit de la tête d'usinage à une température inférieure à la température ambiante. C'est le cas, par exemple, lorsque le conduit de la tête d'usinage est directement relié à une source de dioxyde de carbone liquide réfrigéré. Selon cette deuxième variante, il est préférable que le diamètre du conduit de la tête d'usinage soit supérieur à 1 mm. Dans le cas de cette variante, le dioxyde de carbone réfrigéré assure également le refroidissement interne de la tête d'usinage en amont de la surface de contact.

La première variante est préférée, surtout si le dioxyde de carbone liquide est introduit dans le conduit de la tête d'usinage à une température supérieure à la température ambiante. Ceci permet d'éviter le dépôt de givre sur la paroi extérieure de la tête d'usinage dû à la condensation et la solidification de l'eau présente dans l'atmosphère ambiante.

Le contrôle de l'introduction du dioxyde de carbone liquide, dès la mise en marche de l'appareil d'usinage, peut se faire de manière classique à l'aide d'une électro-vanne reliée au moteur de l'appareil.

En ce qui concerne l'introduction du dioxyde de carbone, le dioxyde de carbone liquide peut être avantageusement introduit dans le conduit de la tête d'usinage avant la mise en marche de l'appareil d'usinage. Cette anticipation permet d'obtenir l'effet de lubrifiant du dioxyde de carbone dès la mise en contact des surfaces, ce dernier mettant un certain temps avant de parvenir au bout du conduit de la tête d'usinage. Il est également généralement préférable de stopper l'introduction du dioxyde de carbone liquide dans le conduit de la tête d'usinage, lorsque l'appareil d'usinage s'arrête de fonctionner

Pour des raisons de sécurité, il est préférable qu'un analyseur de concentration de dioxyde de carbone soit placé à proximité de l'appareil d'usinage, et éventuellement qu'un système d'évacuation du dioxyde de carbone soit également placé à proximité de l'appareil.

L'invention concerne également un dispositif d'usinage mettant en oeuvre le précédent procédé de lubrification adapté à l'usinage. Ce dispositif comprend :
- un arbre d'entraînement et un moteur,
- une source de dioxyde de carbone liquide,
- des moyens d'injection du dioxyde de carbone liquide sous pression comprenant une vanne, ladite vanne étant réglée de manière à s'ouvrir lorsque le moteur du dispositif d'usinage est mis en marche,
- une tête d'usinage :
   . dont une extrémité est reliée à l'arbre d'entraînement, percée d'un conduit, ledit conduit étant ouvert à la fois :
      . au niveau de l'extrémité de la tête d'usinage reliée à l'arbre d'entraînement,
      . au niveau de l'extrémité de la tête d'usinage mise en contact avec une pièce à usiner,
      et ledit conduit étant relié aux moyens d'injection du dioxyde de carbone liquide par son ouverture au niveau de l'extrémité de la tête d'usinage reliée à l'arbre d'entraînement.

Généralement, le dispositif comprend un joint tournant coopérant avec la tête d'usinage et l'arbre d'entraînement, et relié aux moyens d'injection du dioxyde de carbone liquide.

Selon un mode préféré, les moyens d'injection sont constitués d'une lance de production de dioxyde de carbone liquide telle que définie dans la demande de brevet EP-A1-0 882 522. Cette lance comprend généralement un organe de commande sur lequel il suffit d'appuyer pour libérer le dioxyde de carbone liquide. Le dispositif selon l'invention est alors avantageusement mis en oeuvre de manière à ce que, lorsque le dispositif d'usinage est mis en action et approché de la surface de la pièce à usiner, ce mouvement d'approche provoque un appui sur l'organe de commande de la lance de production de dioxyde de carbone, libérant le dioxyde de carbone.

Ainsi qu'indiqué précédemment, le diamètre du conduit de la tête d'usinage du dispositif peut être soit d'au plus 1 mm, soit supérieur à 1 mm, selon la température de la source de dioxyde de carbone liquide injecté.

Selon une variante particulière, le précédent dispositif est un appareil de perçage dont la tête d'usinage est un foret.

Enfin, l'invention concerne l'utilisation de dioxyde de carbone liquide comme lubrifiant.

Cette utilisation présente l'avantage d'éviter tout problème de recyclage ou de retraitement du lubrifiant, de produire des déchets ou copeaux secs directement éliminables ou utilisables, de limiter le nettoyage après usinage des pièces, de pouvoir être directement mis en oeuvre sur les appareils d'usinage utilisés jusqu'à présent avec de l'huile.

Des essais ont été effectués à l'aide d'un dispositif de perçage classiquement utilisé avec un lubrifiant à base d'huile dans lequel l'huile a été remplacée par du dioxyde de carbone injecté sous forme liquide. Ce dispositif comprend un arbre d'entraînement, un moteur et un foret percé en son centre d'un conduit pour introduire le lubrifiant. Le foret présente un diamètre de 10 mm et la conduite en son centre un diamètre de 1 mm. Un joint tournant coopère avec le foret et l'arbre d'entraînement et est relié à une source de dioxyde de carbone liquide via une électro-vanne qui s'ouvre lorsque le moteur du dispositif est mis en marche. La source de dioxyde de carbone liquide est une bouteille : le dioxyde de carbone y est stocké à 20°C sous 58 bars.

Ce dispositif de perçage a été utilisé pour percer des pièces en aluminium, en fer, en acier inoxydable 304, en acier inoxydable 316, en polychlorure de vinyle, en Téflon®.

Pour tous ces perçages; on a pu observer :
- que la vitesse du perçage était identique à celle du perçage classique avec de l'huile de lubrification,
- que la qualité du perçage était meilleure du point de vue de la propreté du perçage, de l'évacuation des copeaux métalliques ou polymères, et de la tolérance, notamment pour les pièces polymères.

En outre, il est important de remarquer que le foret utilisé ne présentait pas de trace d'usure apparente.

Enfin, aucun nettoyage du foret, des pièces usinées ou des lieux n'a été nécessaire.

## Revendications

1. Procédé de lubrification du contact entre deux surfaces, dans lequel on incorpore un lubrifiant entre les deux surfaces, caractérisé en ce que le lubrifiant est constitué essentiellement de dioxyde de carbone injecté au moins en partie sous forme liquide à proximité de la zone de contact desdites surfaces.

2. Procédé selon la revendication 1, caractérisé en ce qu'au moins 80 % en volume du dioxyde de carbone est sous forme liquide lors de son injection

3. Procédé selon la revendication 1 ou 2, caractérisé en ce que, suite à son injection, le dioxyde de carbone est détendu.

4. Procédé selon l'une quelconque des revendications 1 à 3, caractérisé en ce que le dioxyde de carbone est apporté pour être injecté à proximité des surfaces en contact par un conduit se trouvant à l'intérieur d'une des pièces dont la surface est en contact.

5. Procédé selon l'une quelconque des revendications 1 à 3, caractérisé en ce que le dioxyde de carbone est apporté pour être injecté à proximité des surfaces en contact par un conduit se trouvant à l'extérieur d'une des pièces dont les surfaces sont en contact.

6. Procédé de lubrification selon la revendication 4 adapté pour la lubrification d'un appareil d'usinage pour lequel les deux surfaces en contact sont la surface de la tête d'usinage de l'appareil d'usinage et la surface d'une pièce à usiner et dans lequel :
- on utilise un appareil d'usinage comprenant une tête d'usinage dont une extrémité est reliée à un arbre d'entraînement et dont l'autre extrémité est mise en contact avec la pièce à usiner, la tête d'usinage étant percée d'un conduit, ledit conduit étant ouvert à la fois :
. au niveau de l'extrémité de la tête d'usinage reliée à l'arbre d'entraînement,
. au niveau de la zone d'attaque de la tête d'usinage mise en contact avec la pièce à usiner,
- lors de la mise en rotation de l'arbre d'entraînement, du dioxyde de carbone liquide est introduit dans le conduit de la tête d'usinage par l'extrémité reliée à l'arbre d'entraînement et en ressort par l'extrémité mise en contact avec la pièce à usiner.

7. Procédé selon la revendication 6, caractérisé en ce que le dioxyde de carbone liquide est introduit dans le conduit de la tête d'usinage à des conditions de température et de pression au-dessus du point triple.

8. Procédé selon la revendication 6 ou 7, caractérisé en ce que le dioxyde de carbone liquide est introduit dans le conduit de la tête d'usinage à une température supérieure ou égale à la température ambiante.

9. Procédé selon la revendication 8, caractérisé en ce que le diamètre du conduit de la tête d'usinage est d'au plus 1 mm.

10. Procédé selon l'une quelconque des revendications 6 à 7, caractérisé en ce que le dioxyde de carbone liquide est introduit dans le conduit de la tête d'usinage à une température inférieure à la température ambiante.

11. Procédé selon la revendication 10, caractérisé en ce que le diamètre du conduit de la tête d'usinage est supérieur à 1 mm.

12. Procédé selon l'une quelconque des revendications 1 à 9, caractérisé en ce que le dioxyde de carbone liquide est introduit dans le conduit de la tête d'usinage à une température supérieure à la température ambiante.

13. Procédé selon l'une quelconque des revendications 6 à 12, caractérisé en ce que le dioxyde de carbone liquide est introduit dans le conduit de la tête d'usinage avant la mise en marche de l'appareil d'usinage.

14. Procédé selon l'une quelconque des revendications 6 à 13, caractérisé en ce que, lorsque l'appareil d'usinage s'arrête de fonctionner, l'introduction du dioxyde de carbone liquide dans le conduit de la tête d'usinage est stoppée.

15. Procédé selon l'une quelconque des revendications 6 à 14, caractérisé en ce qu'un analyseur de concentration de dioxyde de carbone est placé à proximité de l'appareil d'usinage.

16. Procédé selon l'une quelconque des revendications 6 à 15, caractérisé en ce qu'un système d'évacuation du dioxyde de carbone est placé à proximité de l'appareil d'usinage.

17. Dispositif d'usinage comprenant :
- un arbre d'entraînement et un moteur,
- une source de dioxyde de carbone liquide,
- des moyens d'injection du dioxyde de carbone liquide sous pression comprenant une vanne, ladite vanne étant réglée de manière à s'ouvrir lorsque le moteur du dispositif d'usinage est mis en marche,
- une tête d'usinage :
. dont une extrémité est reliée à l'arbre d'entraînement,
. percée d'un conduit, ledit conduit étant ouvert à la fois :
. au niveau de l'extrémité de la tête d'usinage reliée à l'arbre d'entraînement,
. au niveau de l'extrémité de la tête d'usinage mise en contact avec une pièce à usiner,
et ledit conduit étant relié aux moyens d'injection du dioxyde de carbone liquide par son ouverture au niveau de l'extrémité de la tête d'usinage reliée à l'arbre d'entraînement.

18. Dispositif d'usinage selon la revendication 17, caractérisé en ce qu'il comprend un joint tournant coopérant avec la tête d'usinage et l'arbre d'entraînement, et relié aux moyens d'injection du dioxyde de carbone liquide

19. Dispositif d'usinage selon la revendication 17 ou 18, caractérisé en ce que le diamètre du conduit de la tête d'usinage est d'au plus 1 mm.

20. Dispositif d'usinage selon l'une quelconque des revendications 17 ou 18, caractérisée en ce que le diamètre du conduit de la tête d'usinage est supérieur à 1 mm.

21. Dispositif d'usinage selon l'une quelconque des revendications 17 à 20, caractérisé en ce que la tête d'usinage est un foret.

22. Utilisation de dioxyde de carbone liquide comme lubrifiant.
